# EUROPÄISCHE PATENTANMELDUNG

(11) **EP 4 755 956 A2**
(43) Veröffentlichungstag der Anmeldung: **10.06.2026**
(21) Anmeldenummer: 26159109.3
(22) Anmeldetag: 26.03.2018
(51) Int. Cl.: C08J 5/18

(54) **BIOLOGISCH ABBAUBARE FOLIE**

(30) Priorität: 05.04.2017 DE 102017003341
(62) Teilanmeldung aus: 18713655.1
(71) Anmelder: bio-tec Biologische Naturverpackungen GmbH & Co. KG, 46446 Emmerich (DE)
(72) Erfinder: Schmidt, Harald, 46446 Emmerich (DE); Mathar, Johannes, 7041 GP's-Heerenberg (NL); Roloff, Thorsten, 40789 Monheim (DE); Friedek, Wolfgang, 47551 Bedburg-Hau (DE)
(74) Vertreter: Cohausz & Florack

(57) **Zusammenfassung**

Dargestellt und beschrieben wird eine Folie umfassend 10-90 Gew.-% einer Komponente A und 10-90 Gew.-% einer Komponente B, bezogen auf die Summe der Komponenten A und B,
wobei A ein Polyhydroxyalkanoat ist und
wobei B ein aliphatischer Copolyester ist, der aus mindestens einer Diol Komponente und mindestens einer Dicarbonsäure Komponente zusammengesetzt ist,
und wobei die Folie eine Gesamtdicke von 1 bis 200 µm aufweist.

## Beschreibung

Die Erfindung betrifft eine Folie sowie ein Verfahren zu deren Herstellung. Ferner betrifft die Erfindung die Verwendung eines Polymerblends zur Herstellung einer Folie. Außerdem betrifft die Erfindung Transportbeutel.

Die Belastung der Weltmeere durch Plastikmüll ist ein bereits seit Jahrzehnten bekanntes und bis heute ungelöstes Problem. Vor allem für die Tiere im Meer stellt Plastik ein großes Problem dar. Die Tiere verfangen sich in größeren Plastikteilen und verwechseln kleine Plastikteile mit Nahrung, die sie nicht verdauen können. Vor allem besonders kleine Plastikteile, sogenanntes Mikroplastik, werden von Tieren über die Nahrung aufgenommen und landen so auch in der Nahrungskette der Menschen.

Ein großer Teil der in den Weltmeeren vorhandenen Plastikteile stammt von Kunststofftragetaschen ("Plastikbeuteln"), wie sie im täglichen Gebrauch, etwa zum Einkaufen, Verwendung finden. Die Begriffe "Kunststoff" und "Plastik" werden im Folgenden synonym verwendet.

Recycling, nachhaltiges Nutzen von Kunststoffprodukten und die Säuberung der Weltmeere stellen Ansätze dar, die zu einer Reduktion der Menge an Plastik in den Weltmeeren beitragen sollen. Die sicherste und nachhaltigste Lösung wäre aber, Plastikprodukte herstellen zu können, die unter den natürlichen Bedingungen, die in den Weltmeeren vorliegen, biologisch abgebaut werden.

Der biologische Abbau von Kunststoffprodukten im natürlichen Meerwasser (Salzwasser) ist wesentlich langwieriger und problematischer als der biologische Abbau in aktiven Medien wie Kompost bzw. bei höheren Temperaturen, wie sie in industriellen Kompostieranlagen vorliegen. Zum einen weist Kompost eine besonders hohe Konzentration von am Abbau beteiligten Mikroorganismen auf. Zum anderen haben industrielle Kompostieranlagen genau kontrollierte Bedingungen (z.B. Temperatur, Sauerstoffkonzentration), die einen optimalen biologischen Abbau des Komposts gewährleisten. Der Anspruch an Kunststoffprodukte, die sich in den natürlichen Bedingungen der Weltmeere biologisch abbauen lassen, ist somit ungleich höher als für andere Abbaubedingungen.

Hinzu kommt, dass Kunststoffprodukte neben einer guten biologischen Abbaubarkeit unter den natürlichen Bedingungen der Weltmeere auch noch anwendungsspezifische mechanische Eigenschaften aufweisen müssen. So müssen Transportbeutel aus Kunststoff beispielsweise ausreichende Zugfestigkeits- und Reißdehnungswerte aufweisen, um bestimmungsgemäß im Alltag gebraucht werden zu können. Nur dann kommen diese als Ersatz für traditionelle, biologisch nicht abbaubare Plastikprodukte in Betracht.

Die Kombination von (a) guter biologischer Abbaubarkeit einer Kunststofffolie in Meerwasser einerseits und (b) guten mechanischen Eigenschaften einer Kunststofffolie andererseits stellt sich in der Praxis als außerordentlich schwierig heraus. Bisherige Ansätze, diese beiden scheinbar gegensätzlichen Eigenschaften einer Folie in Einklang miteinander zu bringen, waren nur bedingt erfolgreich.

Die EP 2 913 362 A1 beschreibt eine Folie umfassend Polyhydoxyalkanoate und Polylactide, die einen verbesserten biologischen Abbau in einer Umwelt mit Mikroorganismen aufweist und gleichzeitig gute Lagerungsbeständigkeit, Festigkeit und Flexibilität besitzt. Der biologische Abbau ist allerdings nicht optimiert auf die besonders anspruchsvollen Abbaubedingungen in natürlichem Meerwasser.

Die EP 1 008 629 A1 beschreibt einen biologisch abbaubaren Polyesterharz umfassend 100 Gewichtsteile eines aliphatischen Polyesterharzes und 1-200 Gewichtsteile Polycaprolacton. Aus diesem Polymergemisch können eine Vielzahl von unterschiedlichen, biologisch abbaubaren Produkten hergestellt werden. Allerdings ist die biologische Abbaubarkeit nicht auf die besonders anspruchsvollen Abbaubedingungen in natürlichem Meerwasser eingestellt.

Keine der beschriebenen Folien löst zugleich das Problem der besonderen Herausforderung des biologischen Abbaus im Meerwasser und weist trotzdem zufriedenstellende mechanische Eigenschaften auf.

Ausgehend von dem zuvor beschriebenen Stand der Technik besteht die Aufgabe der Erfindung darin, eine Folie bereitzustellen, die eine sehr gute biologische Abbaubarkeit in Meerwasser aufweist und gleichzeitig hervorragende mechanische Eigenschaften aufweist. Vorzugsweise soll sich die Folie nach deren Einbringung in Meerwasser - gleichzeitig mit, vor oder nach Beginn des biologischen Abbaus der Folie(nteile) zu Kohlenstoffdioxid und Wasser - in kleinere Partikel zersetzen. Die Erfindung setzt sich außerdem zum Ziel, eine Folie bereitzustellen, die besonders geeignet ist zur Herstellung von Transportbeuteln.

Diese Aufgaben werden ganz oder teilweise durch die in Punkt 1 angegebene Folie, die in Punkt 24 angegebene Verwendung, das in Punkt 27 angegebene Erzeugnis und das in Punkt 30 angegebene Verfahren gelöst.

Vorteilhafte Ausgestaltungen der Erfindung sind in den abhängigen Punkten angegeben und werden nachfolgend wie der allgemeine Erfindungsgedanke im Einzelnen erläutert.

Die erfindungsgemäße Folie zeichnet sich dadurch aus, dass diese 10 bis 90 Gew.-% einer Komponente A und 10 bis 90 Gew.-% einer Komponente B, bezogen auf die Summe der Komponenten A und B, enthält, wobei Komponente A ein Polyhydroxyalkanoat ist und Komponente B ein aliphatischer Copolyester ist, der aus mindestens einer Diol Komponente und mindestens einer Dicarbonsäure Komponente zusammengesetzt ist, und wobei die Folie eine Gesamtdicke von 1 bis 200 µm aufweist.

Überraschend hat sich gezeigt, dass die erfindungsgemäßen Folien sowohl hervorragende mechanische Eigenschaften wie hohe Zugfestigkeit und/oder hohe Reißdehnung und eine sehr gute biologische Abbaubarkeit in natürlichem Meerwasser aufweisen.

Ohne an eine wissenschaftliche Theorie gebunden sein zu wollen, erscheint die überraschende Wirkung der Erfindung auf die besonderen Eigenschaften der Kombination der Komponenten A und B zurückzuführen zu sein. Umfangreiche experimentelle Studien waren erforderlich, um geeignete Bestandteile und Verhältnisse für die Komponenten A und B zu finden. Wenn andere als die für die Komponenten A und B definierten Polymere miteinander kombiniert wurden, so wiesen die daraus hergestellten Folien entweder unzureichende mechanische Eigenschaften auf oder aber die biologische Abbaubarkeit der Folie in Meerwasser war unzureichend. Ferner ist es für die biologische Abbaubarkeit in Meerwasser und die mechanischen Eigenschaften der Folien unverzichtbar, dass das richtige Mengenverhältnis der Komponenten A und B gewählt wird.

Vorzugsweise weist die Folie mindestens eine der folgenden mechanischen Eigenschaften auf:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527.

Die vorgenannten mechanischen Eigenschaften werden vorzugsweise gemäß EN ISO 527-3:2003-07 bestimmt.

Vorteilhafterweise weist die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts auf und/oder mindestens 30% des organischen Kohlenstoffs der Folie sind nach Einbringen in Salzwasser innerhalb von 180 Tagen bei einer Temperatur von 30 ± 2 °C, gemäß der Methode ASTM D6691-09, in Kohlenstoffdioxid umgesetzt.

Die Messung des Abbaus in Salzwasser nach kontrollieren Testbedingungen gemäß ASTM D6691-09 erfolgt vorzugsweise an Folien mit einer Dicke von 1 bis 100 µm, insbesondere von 10 bis 40 µm, noch bevorzugt mit einer Dicke von etwa 20 µm.

Gemäß einer bevorzugten Ausführungsform enthält die Folie 10 bis 90 Gew.-% einer Komponente A und 10 bis 90 Gew.-% einer Komponente B, bezogen auf die Summe der Komponenten A und B, wobei Komponente A ein Polyhydroxyalkanoat ist und Komponente B ein aliphatischer Copolyester ist, der aus mindestens einer Diol Komponente und mindestens einer Dicarbonsäure Komponente zusammengesetzt ist, und wobei die Folie eine Gesamtdicke von 1 bis 200 µm sowie mindestens eine der folgenden mechanischen Eigenschaften aufweist:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;

und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

Die erfindungsgemäße Folie enthält eine Komponente A, die ein Polyhydroxyalkanoat ist.

Wenn hier oder an anderer Stelle von Polyhydroxyalkanoaten die Rede ist, so sind damit Polyester von Hydroxyfettsäuren gemeint, die Monomere mit einer Kettenlänge von mindestens 4 C-Atomen, insbesondere von 4 bis 18 C-Atomen oder von 4 bis 9 C-Atomen, enthalten. Polymilchsäure ist somit z.B. kein Polyhydroxyalkanoat im Sinne der Erfindung.

Komponente A kann gemäß einer vorteilhaften Ausführungsform der Erfindung ausgewählt sein aus der Gruppe bestehend aus Poly(3-hydroxybutanoat), Poly(3-hydroxyvalerat), Poly(3-hydroxyhexanoat), Poly(3-hydroxybutyrat-co-3-valerat), Poly(3-hydroxybutyrat-co-3-hexanoat) und Mischungen davon. Gemäß einer weiteren vorteilhaften Ausführungsform kann Komponente A ausgewählt sein aus der Gruppe bestehend aus Poly(3-hydroxybutyrat-co-3-valerat), Poly(3-hydroxybutyrat-co-3-hexanoat) und Mischungen davon. Bei einer besonders bevorzugte Ausführungsform der Erfindung ist Komponente A Poly(3-hydroxybutyrat-co-3-hexanoat).

Gemäß einer bevorzugten Ausführungsform der Erfindung weist Komponente A ein zahlenmittleres Molekulargewicht MW von 100.000 bis 1.500.000 g/mol, vorzugsweise von 200.000 g/mol bis 1.000.000 g/mol, vorzugsweise 300.000 bis 800.000 g/mol, weiter bevorzugt 400.000 bis 700.000 g/mol und besonders bevorzugt 500.000 bis 600.000 g/mol, auf.

Neben Komponente A enthält die Folie mindestens eine weitere Komponente B. Erfindungsgemäß ist Komponente B ein aliphatischer Copolyester, der aus mindestens einer Diol Komponente und mindestens einer Dicarbonsäure Komponente zusammengesetzt ist. Gemäß einer bevorzugten Ausführungsform der Erfindung ist Komponente B ein aliphatischer Copolyester, der aus mindestens einer Diol Komponente und mindestens zwei Dicarbonsäure Komponenten zusammengesetzt ist.

Das Kohlenstoffgerüst der Diol Komponente kann erfindungsgemäß linear, kettenverzweigt und/oder zyklisch sein. Die erfindungsgemäße Diol Komponente hat eine Kettenlänge von mindestens zwei Kohlenstoffatomen und maximal zwölf Kohlenstoffatomen. Bevorzugt ist eine Kettenlänge von zwei bis sechs Kohlenstoffatomen. Bevorzugt wird die Diol Komponente ausgewählt aus einer Gruppe bestehend aus 1,2-Ethandiol, 1,2-Propandiol, 1,3-Propandiol, 1,2-Butandiol, 1,3-Butandiol, 1,4-Butandiol, 2,3-Butandiol, 1,2-Pentandiol, 1,3-Pentandiol, 1,4-Pentandiol, 1,5-Pentandiol, 2,3-Pentandiol, 2,4-Pentandiol, 1,2-Hexandiol, 1,3-Hexandiol, 1,4-Hexandiol, 1,5-Hexandiol, 1,6-Hexandiol, 2,3-Hexandiol, 2,4-Hexandiol, 2,5-Hexandiol, 3,4-Hexandiol, 1,2-Cyclopentandiol, 1,3-Cyclopentandiol, 1,2-Cyclohexandiol, 1,3-Cyclohexandiol, 1,4-Cyclohexandiol, Diethylenglycol, Triethylenglycol und Mischungen davon. Besonders bevorzugt als Diol Komponente der erfindungsgemäßen Komponente B sind Diole ausgewählt aus einer Gruppe bestehend aus 1,2-Ethandiol, 1,3-Propandiol, 1,4-Butandiol und Mischungen davon. Ganz besonders bevorzugt als Diol Komponente ist 1,4-Butandiol.

Das Kohlenstoffgerüst der Dicarbonsäure Komponente kann erfindungsgemäß linear, verzweigt und/oder zyklisch sein, bevorzugt ist das Kohlenstoffgerüst der Dicarbonsäure Komponente linear. Die erfindungsgemäße Dicarbonsäure Komponente hat eine Kettenlänge von zwei bis zwanzig Kohlenstoffatomen, bevorzugt von vier bis zwölf Kohlenstoffatomen. Bevorzugt wird die Dicarbonsäure Komponente ausgewählt aus einer Gruppe bestehend aus Bernsteinsäure, Adipinsäure, Sebacinsäure, Azelainsäure, 1,12-Dodecandisäure und Mischungen davon. Besonders bevorzugt wird die erfindungsgemäße Dicarbonsäure Komponente ausgewählt aus einer Gruppe bestehend aus Bernsteinsäure, Adipinsäure, Sebacinsäure und Mischungen davon.

Bevorzugt ist der aliphatische Copolyester gemäß Komponente B ein thermoplastischer aliphatischer Copolyester.

Die erfindungsgemäßen Diol und Dicarbonsäure Komponenten gemäß Komponente B können chemisch und/oder biologisch hergestellt werden.

In einer bevorzugten Ausführungsform der Erfindung handelt es sich bei dem aliphatischen Copolyester gemäß Komponente B um Polybutylensuccinat oder Polybutylenadipat-co-succinat. Eine besonders bevorzugte Ausführungsform der Erfindung nutzt Polybutylenadipat-co-succinat als Komponente B.

Vorteilhafterweise weist der aliphatische Copolyester gemäß Komponente B ein zahlenmittleres Molekulargewicht MW von 50.000 bis 500.000 g/mol, vorzugsweise von 70.000 bis 400.000 g/mol, bevorzugt von 90.000 bis 300.000 g/mol, besonders bevorzugt von 100.000 bis 200.000 g/mol, auf.

Die erfindungsgemäße Folie kann neben den Komponenten A und B noch weitere polymere Komponenten enthalten. Insbesondere kann die erfindungsgemäße Folie neben den Komponenten A und B Poly(butylenadipat-co-terephthalat) (PBAT) oder Poly(butylensebacat-co-terephthalat) (PBST) oder Mischungen daraus enthalten.

Gemäß einer Ausführungsform weist die Folie 0,1 bis 30 Gew.-%, vorzugsweise 1 bis 25 Gew.-%, vorzugsweise 3 bis 20 Gew.-%, weiter bevorzugt 4 bis 15 Gew.-%, besonders bevorzugt 5 bis 12 Gew.-% Poly(butylenadipat-co-terephthalat) und/oder Poly(butylensebacat-co-terephthalat) (PBST) auf. Gemäß einer weiteren Ausführungsform weist die Folie 15 bis 25 Gew.-%, vorzugsweise 17 bis 23 Gew.-%, besonders bevorzugt 18 bis 22 Gew.-% Poly(butylenadipat-co-terephthalat) und/oder Poly(butylensebacat-co-terephthalat) (PBST) auf.

Als weiteren Bestandteil kann die erfindungsgemäße Folie 0,1 bis 20 Gew.-%, vorzugsweise 2 bis 18 Gew.-%, weiter bevorzugt 5 bis 15 Gew.-%, besonders bevorzugt 8-12 Gew.-% Stärke enthalten.

Erfindungsgemäß kann als Stärke unter anderem thermoplastische Stärke, denaturierte Stärke und/oder Stärkederivate eingesetzt werden. Bevorzugt kann thermoplastische Stärke eingesetzt werden.

Für viele Anwendungszwecke ist es vorteilhaft, wenn die Folie eine Gesamtdicke von 5 bis 200 µm, vorzugsweise von 10 bis 80 µm, besonders bevorzugt von 15 bis 60 µm aufweist. Die Folie eignet sich in unterschiedlichen Dicken für die Herstellung unterschiedlicher Produkte. Folien in den genannten Dicken eignen sich insbesondere zur Herstellung von Tragetaschen und Transportbeuteln für den Alltagsgebrauch.

Die mechanischen Eigenschaften und die biologische Abbaubarkeit der erfindungsgemäßen Folie werden maßgeblich durch das Mengenverhältnis der Komponenten A und B bestimmt.

Die erfindungsgemäße Folie enthält 10 bis 90 Gew.-% einer Komponente A bezogen auf die Summe der Komponenten A und B. Gemäß einer bevorzugten Ausführungsform der Erfindung enthält die Folie vorzugsweise 20 bis 80 Gew.-%, besonders bevorzugt 25 bis 75 Gew.-% der Komponente A bezogen auf die Summe der Komponenten A und B.

Die erfindungsgemäße Folie enthält 10 bis 90 Gew.-% einer Komponente B bezogen auf die Summe der Komponenten A und B.

In einer bevorzugten Ausführungsform der Erfindung enthält die Folie vorzugsweise 20 bis 80 Gew.-%, besonders bevorzugt 25 bis 75 Gew.-% der Komponente B, bezogen auf die Summe von Komponenten A und B.

Gemäß einer bevorzugten Ausführungsform der Erfindung enthält die Folie 10 bis 50 Gew.-%, vorzugsweise 20 bis 40 Gew.-%, weiter bevorzugt 25 bis 40 Gew.-%, noch bevorzugt 25 bis 35 Gew.-% und besonders bevorzugt 28 bis 32 Gew.-% der Komponente A, bezogen auf die Summe der Komponenten A und B. Gemäß dieser Ausführungsform enthält die Folie ferner vorzugsweise 50 bis 90 Gew.-%, weiter bevorzugt 60 bis 80 Gew.-%, noch bevorzugt 60 bis 75 Gew.-%, noch bevorzugt 65 bis 75 Gew.-% und besonders bevorzugt 68 bis 72 Gew.-% der Komponente B, bezogen auf die Summe der Komponenten A und B.

Gemäß einer weiteren bevorzugten Ausführungsform der Erfindung enthält die Folie 10 bis 50 Gew.-%, vorzugsweise 20 bis 40 Gew.-%, weiter bevorzugt 25 bis 40 Gew.-%, noch bevorzugt 25 bis 35 Gew.-% und besonders bevorzugt 28 bis 32 Gew.-% der Komponente B, bezogen auf die Summe der Komponenten A und B. Gemäß dieser Ausführungsform enthält die Folie ferner vorzugsweise 50 bis 90 Gew.-%, weiter bevorzugt 60 bis 80 Gew.-%, noch bevorzugt 60 bis 75 Gew.-%, noch bevorzugt 65 bis 75 Gew.-% und besonders bevorzugt 68 bis 72 Gew.-% der Komponente A, bezogen auf die Summe der Komponenten A und B.

Wenn hier oder an anderer Stelle von einer Komponente B die Rede ist, kann diese Komponente B aus einer Verbindung und/oder mehreren Verbindungen bestehen. In einer bevorzugten Ausführungsform der Erfindung besteht die Komponente B aus einer einzigen Verbindung. In einer weiteren bevorzugten Ausführungsform der Erfindung besteht die Komponenten B aus mehreren unterschiedlichen Verbindungen, insbesondere aus zwei oder drei unterschiedlichen Verbindungen.

Die erfindungsgemäße Folie zeichnet sich durch ausgezeichnete mechanische Eigenschaften aus, die ihren Einsatz in Transportbeuteln ermöglicht.

So weist die erfindungsgemäße Folie im trockenen Zustand vorzugsweise eine Reißdehnung in Extrusionsrichtung (MD, machine direction, Maschinenlaufrichtung), gemäß EN ISO 527, von mindestens 100% auf. In einer bevorzugten Ausführungsform der Erfindung beträgt die Reißdehnung in Extrusionsrichtung (MD), gemäß EN ISO 527, mindestens 150%, vorzugsweise mindestens 200%, bevorzugt mindestens 300%, besonders bevorzugt mindestens 400%.

Weiterhin weist die erfindungsgemäße Folie im trockenen Zustand vorzugsweise eine Reißdehnung entgegen der Extrusionsrichtung (TD, transverse direction, Querrichtung), gemäß EN ISO 527, von mindestens 100% auf. In einer bevorzugten Ausführungsform der Erfindung beträgt die Reißdehnung entgegen der Extrusionsrichtung (TD), gemäß EN ISO 527, mindestens 150%, vorzugsweise mindestens 200%, bevorzugt mindestens 300%, besonders bevorzugt mindestens 400%.

Zusätzlich weist die erfindungsgemäße Folie im trockenen Zustand vorzugsweise eine Zugfestigkeit in Extrusionsrichtung (MD) von mindestens 15 MPa, gemäß EN ISO 527, auf. Gemäß einer bevorzugten Ausführungsform der Erfindung beträgt die Zugfestigkeit in Exusionsrichtung (MD) der Folie im trockenen Zustand mindestens 20 MPa, vorzugsweise mindestens 25 MPa, besonders bevorzugt mindestens 30 MPa.

Außerdem weist die erfindungsgemäße Folie im trockenen Zustand vorzugsweise eine Zugfestigkeit entgegen der Extrusionsrichtung (TD) von mindestens 15 MPa, gemäß EN ISO 527, auf. Gemäß einer bevorzugten Ausführungsform der Erfindung beträgt die Zugfestigkeit entgegen der Exusionsrichtung (TD) der Folie im trockenen Zustand mindestens 20 MPa, vorzugsweise mindestens 25 MPa, besonders bevorzugt mindestens 30 MPa.

Vorteilhafterweise weist die Folie einen Dart-Drop Wert in trockenem Zustand von mindestens 4 g/um, vorzugsweise von mindestens 5 g/um, besonders bevorzugt von mindestens 6 g/um, gemäß der Methode ASTM D1709, auf.

Die erfindungsgemäße Folie zeichnet sich neben den hervorragenden mechanischen Eigenschaften auch durch eine sehr gute biologische Abbaubarkeit und schnelle Zersetzung in Salzwasser aus.

So weist die erfindungsgemäße Folie vorzugsweise nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts auf.

In einer bevorzugten Ausführungsform der Erfindung weist die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 20 Gew.-%, vorzugsweise maximal 10 Gew.-% des ursprünglichen Trockengewichts auf.

Der Begriff Salzwasser bezieht sich hier auf ein natürliches Meerwassermedium nach Punkt 7.5.2 der Methode ASTM D6691-09.

Wenn hier oder an anderer Stelle die Methode ASTM D6691-09 erwähnt wird, ist damit die am 15. November 2009 erteilte Fassung mit dem Titel "*Standard Test Method for Determining Aerobic Biodegradation of Plastic Materials in the Marine Environment by a Defined Microbial Consortium or Natural Sea Water Inoculum*" gemeint.

Die erfindungsgemäße Folie besitzt eine hervorragende biologische Abbaubarkeit in Salzwasser. Mindestens 30% des organischen Kohlenstoffs der erfindungsgemäßen Folie sind vorzugsweise nach Einbringen der Folie in Salzwasser innerhalb von 180 Tagen bei einer Temperatur von 30 ± 2°C, gemäß der Methode ASTM D6691-09, in Kohlenstoffdioxid umgesetzt.

In einer bevorzugten Ausführungsform der Erfindung ist nach Einbringen der Folie in Salzwasser für 180 Tage bei einer Temperatur von 30 ± 2°C unter kontrollierten Testbedingungen, gemäß der Methode ASTM D6691-09, vorzugsweise mindestens 40%, besonders bevorzugt mindestens 50% des organischen Kohlenstoffs der Folie in Kohlenstoffdioxid umgesetzt. Der Begriff Salzwasser bezieht sich hier auf ein natürliches Meerwassermedium nach Punkt 7.5.2 der Methode ASTM D6691-09.

Der biologische Abbau der erfindungsgemäßen Folie findet nicht nur in den natürlichen Bedingungen von Meerwasser außergewöhnlich effektiv statt. In einer bevorzugten Ausführungsform der Erfindung ist der organische Kohlenstoff der Folie in aktiven Abbaubedingungen gemäß der Methode DIN EN ISO 14855-1:2012 innerhalb von 180 Tagen vorzugsweise zu mindestens 70%, weiter bevorzugt zu mindestens 80%, besonders bevorzugt zu mindestens 90% zu Kohlenstoffdioxid umgesetzt.

Der biologische Abbau der Folie im Meerwasser erfolgt in der Regel in zwei Schritten, welche entweder gleichzeitig oder zeitlich versetzt zueinander einsetzen. Zum einen zersetzt sich die erfindungsgemäße Folie im Meerwasser in kleinere Teile ("Fragmentierung"). Zum anderen werden die Plastikteile biologisch auf molekularer Ebene abgebaut, indem sie von Mikroorganismen zu Kohlenstoffdioxid und Wasser umgesetzt werden ("biologischer Abbau"). Häufig, aber nicht zwingend, setzt der "Fragmentierungs"-Schritt vor dem "biologischen Abbau"-Schritt ein.

Die erfindungsgemäße Folie kann als ein- oder mehrschichtige Folie ausgebildet sein. Vorzugsweise ist die erfindungsgemäße Folie als einschichtige Folie ausgebildet, da sich eine einschichtige Folie besonders einfach und kostengünstig herstellen und zu Transportbeuteln weiterverarbeiten lässt. Es ist jedoch auch möglich, dass die erfindungsgemäße Folie eine oder mehrere gleiche oder unterschiedliche weitere Schichten umfasst. Die einzelnen Schichten einer Mehrschichtfolie können sich beispielsweise in ihrer Zusammensetzung und ihrer Dicke voneinander unterscheiden.

Die erfindungsgemäße Folie kann neben den genannten Bestandteilen weitere Bestandteile enthalten.

Die erfindungsgemäße Folie kann weiterhin beispielsweise Weichmacher enthalten. Beispiele für Weichmacher sind Glycerin, Sorbitol, Arabinose, Lycose, Xylose, Glykose, Fructose, Mannose, Allose, Altrose, Galactose, Gulose, Iodose, Inosit, Sorbose, Talit und Monoethoxylat-, Monopropoxylat- und Monoacetat-Derivate hiervon sowie Ethylen, Ethylenglykol, Propylenglykol, Ethylendiglykol, Propylendiglykol, Ethylentriglykol, Propylentriglykol, Polyethylenglykol, Polypropylenglykol, 1,2-Propandiol, 1,3-Propandiol, 1,2-, 1,3-, 1,4-Butandiol, 1,5-Pentandiol, 1,6-,1,5-Hexandiol, 1,2,6-, 1,3,5-Hexantriol, Neopentylglykol, Trimethylopropan, Pentaerithritol, Sorbit und deren Acetat-, Ethoxylat- und Propoxylat-derivate und Mischungen daraus.

Vorzugsweise ist die erfindungsgemäße Folie frei von oligomeren Esterverbindungen mit einem gewichtsmittleren Molekulargewicht von 500 bis 5000 g/mol, insbesondere von Poly(1,3-butylenglycol-co-1,2-propylenglycoladipisäure) terminiert mit 2-Ethylhexanol, Poly(neopentylglycol-co-1,4-butylenglycoladipinsäure) terminiert mit 2-Ethylhexanol, Poly(1,3-butylenglycoladipinsäure) nicht-terminiert, Poly(1,2-propylenglycoladipinsäure-co-phthalsäure) terminiert mit 2-Ethylhexanol, Poly(neopentylglycoladipinsäure) terminiert mit 2-Ethylhexanol, Poly(1,2-Propylenglycoladipinsäure-co-phthalsäure) terminiert mit 2-Ethylhexanol, Poly(1,3-butylenglycoladipinsäure) terminiert mit gemischten Fettsäuren, Poly(1,2-propylenglycoladipinsäure) terminiert mit 2-Ethylhexanol, Poly(1,2-propylenglycol-co-1,4-butylenglycoladipinsäure) terminiert mit 2-Ethylhexanol, Poly(1,4-butylenglycoladipinsäure) oder Poly(1,4-butylenglycol-co-ethylenglycoladipinsäure), jeweils mit einem gewichtsmittleren Molekulargewicht von 500 bis 5000 g/mol.

Ferner kann die erfindungsemäße Folie Dispergierhilfen wie z.B. Detergentien, Schmelzstabilisatoren, Verarbeitungshilfsmittel, Stabilisatoren, Antioxidationsmittel, Antiflammmittel, Antiblockmittel, Füllstoffe und/oder Additive enthalten.

Darüber hinaus kann die erfindungsgemäße Folie zusätzlich weitere Polymere wie zum Beispiel Polyethylenglykol, Polyvinylalkohol, Chitin, Chitosan, Cellulose, Cellulosederivate, Polyester, Polydimethylaminoethylmethacrylat und Mischungen davon enthalten.

Gemäß einer weiteren bevorzugten Ausführungsform der Erfindung enthält die erfindungsgemäße Folie ein oder mehrere Füllstoffe und/oder ein oder mehrere Zerfallsmittel. Abhängig von Art und Menge an Füllstoff und/oder Zerfallsmittel kann die Zerfallsgeschwindigkeit der erfindungsgemäßen Folie beeinflusst werden.

Bevorzugte Füllstoffe für diesen Zweck sind ausgewählt aus der Gruppe bestehend aus Calciumcarbonat, Talkum, Kaolin, Dolomit, Glimmer, Kieselsäure und Mischungen davon. Zerfallsmittel sind dem Fachmann bekannt. Bevorzugte Zerfallsmittel für diesen Zweck sind ausgewählt aus der Gruppe bestehend aus Natriumhydrogencarbonat, Alginsäure, Calciumalginat, Natriumalginat, mikrokristalline Cellulose, Natriumcarboxymethylcellulose, Stärke, Natriumcarboxymethylstärke, Polyvinylpyrrolidon und Mischungen davon. Stärke kann nativ oder destrukturiert vorliegen.

Die Erfindung betrifft ferner die Verwendung eines Polymerblends, enthaltend Komponente A und Komponente B, zur Herstellung einer Folie mit einer Gesamtdicke von 1 bis 200 µm und mindestens einer der folgenden mechanischen Eigenschaften:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

Für die Komponenten A und B der erfindungsgemäßen Verwendung gilt das zu den Komponenten A und B der erfindungsgemäßen Folie Gesagte jeweils entsprechend.

Vorzugsweise enthält der Polymerblend 10-90 Gew.-%, insbesondere 20 bis 80 Gew.-% oder 25 bis 75 Gew.-% der Komponente A, bezogen auf die Summe der Komponenten A und B. Ferner enthält der Polymerblend vorzugsweise 10-90 Gew.-%, insbesondere 20 bis 80 Gew.-% oder 25 bis 75 Gew.-% der Komponente B, bezogen auf die Summe der Komponenten A und B.

Gemäß einer bevorzugten Ausführungsform der Erfindung enthält der Polymerblend 10 bis 50 Gew.-%, vorzugsweise 20 bis 40 Gew.-%, weiter bevorzugt 25 bis 40 Gew.-%, noch bevorzugt 25 bis 35 Gew.-% und besonders bevorzugt 28 bis 32 Gew.-% der Komponente A, bezogen auf die Summe der Komponenten A und B. Gemäß dieser Ausführungsform enthält der Polymerblend ferner vorzugsweise 50 bis 90 Gew.-%, weiter bevorzugt 60 bis 80 Gew.-%, noch bevorzugt 60 bis 75 Gew.-%, noch bevorzugt 65 bis 75 Gew.-% und besonders bevorzugt 68 bis 72 Gew.-% der Komponente B, bezogen auf die Summe der Komponenten A und B.

Gemäß einer weiteren bevorzugten Ausführungsform der Erfindung enthält der Polymerblend 10 bis 50 Gew.-%, vorzugsweise 20 bis 40 Gew.-%, weiter bevorzugt 25 bis 40 Gew.-%, noch bevorzugt 25 bis 35 Gew.-% und besonders bevorzugt 28 bis 32 Gew.-% der Komponente B, bezogen auf die Summe der Komponenten A und B. Gemäß dieser Ausführungsform enthält der Polymerblend ferner vorzugsweise 50 bis 90 Gew.-%, weiter bevorzugt 60 bis 80 Gew.-%, noch bevorzugt 60 bis 75 Gew.-%, noch bevorzugt 65 bis 75 Gew.-% und besonders bevorzugt 68 bis 72 Gew.-% der Komponente A, bezogen auf die Summe der Komponenten A und B.

Ferner kann der Polymerblend einen oder mehrere der vorgenannten Bestandteile enthalten.

Gegenstand der Erfindung sind außerdem auch Erzeugnisse, die mit der erfindungsgemäßen Folie hergestellt oder herstellbar sind.

Von besonderer Bedeutung sind Transportbeutel, die aus der erfindungsgemäßen Folie hergestellt oder herstellbar sind. Die erfindungsgemäßen Folien eignen sich zur Herstellung von Transportbeuteln jeglicher Art, einschließlich Tragetaschen, Obstbeutel, Gemüsebeutel, Light T-Shirt Bags und Ultra-Light T-Shirt Bags.

Die unterschiedlichen Arten von Transportbeuteln können je nach Anwendungszweck ein unterschiedliches Gewicht aufweisen. In einer bevorzugten Ausführungsform der Erfindung weist beispielsweise ein erfindungsgemäßer Transportbeutel ein Gewicht von vorzugsweise 1 bis 90 g, weiter bevorzugt 2 bis 50 g oder besonders bevorzugt 20 bis 40 g. Für andere Anwendungen eignen sich besonders erfindungsgemäße Transportbeutel, die ein Gewicht von vorzugsweise 1 bis 10 g, besonders bevorzugt 1,5 bis 5 g aufweisen.

Die Erfindung betrifft schließlich auch ein Verfahren zur Herstellung einer Folie. Das erfindungsgemäße Verfahren zur Herstellung einer Folie umfasst mindestens folgende Schritte:
a. Bereitstellen eines Polymerblends enthaltend Komponente A und Komponente B;
b. Ausbilden einer Folie aus dem Polymerblend gemäß Schritt a.

Geeignete Verfahren zur Ausbildung einer Folie gemäß Schritt b. sind dem Fachmann allgemein bekannt und umfassen typischerweise einen Extrusionsschritt (insbesondere einen Coextrusionsschritt) und/oder einen Kaschierungsschritt.

Für die Komponenten A und B des erfindungsgemäßen Verfahrens gilt das zu den Komponenten A und B der erfindungsgemäßen Folie Gesagte jeweils entsprechend.

Vorzugsweise enthält der Polymerblend 10-90 Gew.-%, insbesondere 20 bis 80 Gew.-% oder 25 bis 75 Gew.-% der Komponente A, bezogen auf die Summe der Komponenten A und B. Ferner enthält der Polymerblend vorzugsweise 10-90 Gew.-%, insbesondere 20 bis 80 Gew.-% oder 25 bis 75 Gew.-% der Komponente B, bezogen auf die Summe der Komponenten A und B.

Gemäß einer bevorzugten Ausführungsform des erfindungsgemäßen Verfahrens enthält der Polymerblend 10 bis 50 Gew.-%, vorzugsweise 20 bis 40 Gew.-%, weiter bevorzugt 25 bis 40 Gew.-%, noch bevorzugt 25 bis 35 Gew.-% und besonders bevorzugt 28 bis 32 Gew.-% der Komponente A, bezogen auf die Summe der Komponenten A und B. Gemäß dieser Ausführungsform enthält der Polymerblend ferner vorzugsweise 50 bis 90 Gew.-%, weiter bevorzugt 60 bis 80 Gew.-%, noch bevorzugt 60 bis 75 Gew.-%, noch bevorzugt 65 bis 75 Gew.-% und besonders bevorzugt 68 bis 72 Gew.-% der Komponente B, bezogen auf die Summe der Komponenten A und B.

Gemäß einer weiteren bevorzugten Ausführungsform des erfindungsgemäßen Verfahrens enthält der Polymerblend 10 bis 50 Gew.-%, vorzugsweise 20 bis 40 Gew.-%, weiter bevorzugt 25 bis 40 Gew.-%, noch bevorzugt 25 bis 35 Gew.-% und besonders bevorzugt 28 bis 32 Gew.-% der Komponente B, bezogen auf die Summe der Komponenten A und B. Gemäß dieser Ausführungsform enthält der Polymerblend ferner vorzugsweise 50 bis 90 Gew.-%, weiter bevorzugt 60 bis 80 Gew.-%, noch bevorzugt 60 bis 75 Gew.-%, noch bevorzugt 65 bis 75 Gew.-% und besonders bevorzugt 68 bis 72 Gew.-% der Komponente A, bezogen auf die Summe der Komponenten A und B.

Ferner kann der Polymerblend einen oder mehrere der vorgenannten Bestandteile enthalten.

Die Erfindung wird im Folgenden anhand von Ausführungsbeispielen näher erläutert.

### Beispiele

Für die Vergleichs- und Ausführungsbeispiele wurden folgende Materialien verwendet: Poly(butylensuccinat-co-adipat), PBSA (BioPBS FD92PM, PTT MCC Biochem Company Limited); Poly(hydroxybutyrat-co-hexanoat), PHBH (AONILEX 151N; KANEKA); Erucasäureamid (LOXIOL E SPEZ P, Emery Oleochemicals).

### Beispiel 1:

Mit einem Doppelschneckenextruder des Typs Coperion ZSK 40 (zweiwelliger Schneckenkneter), Schneckendurchmesser 40 mm, L/D = 42, wurde ein Polymerblend mit der in Tab. 1 angegebenen Rezeptur A hergestellt und zu Granulat verarbeitet (dosierte Anteile in Massenprozent):

**Tab. 1: Rezeptur A**

| Verbindung | Menge |
|---|---|
| PHBH | 29, 7 |
| PBSA | 69, 3 |
| Loxiol | 1 |

Dabei wurden folgende Compoundierparameter eingehalten:

**Tab. 2: Temperaturprofil (Doppelschneckenextruder ZSK 40**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 105 °C | 120 °C | 120 °C | 135 °C | 155 °C | 165 °C | 165 °C | 165 °C | 160 °C | 160 °C |

| | |
|---|---|
| Drehzahl | 100 min⁻¹ |
| Durchsatz | 50 kg/h |
| Entgasung | - 0,98 bar, Zone 8 |
| Wassergehalt | 0,1 % |

Aus dem hergestellten Granulat wurden Blasfolien hergestellt. Hierfür wurde das Granulat A mit einem Einwellenextruder des Typs KABRA, Schneckendurchmesser 65 mm, L/D = 23, aufgeschmolzen und zu einer Blasfolie verarbeitet.

Für die Untersuchung der Haltbarkeit der Folie in Wasser wurden Proben der Folie in Diarahmen eingespannt und in natürliches Meerwasser eingelegt. Die Zersetzung der Folie wurde visuell begutachtet. In Tab. 3 ist die relative Zersetzung der Folie innerhalb eines Zeitraums von 72 Tagen in Meerwasser dokumentiert.

**Tab. 3: Relative Zersetzung der Folie erhältlich aus Granulat A**

| Tage | Zersetzung |
|---|---|
| 0 | 1 |
| 22 | 1 |
| 37 | (3) -4 |
| 72 | 4 |

### Legende:

| Wert | Bedeutung |
|---|---|
| 1 | Folie intakt |
| 2 | Zersetzung sichtbar |
| 3 | Zersetzung fortgeschritten |
| 4 | Folie komplett zersetzt |

Zusätzlich wurden die mechanischen Eigenschaften der Folie überprüft. Die Messungen der Zugfestigkeit und Reißdehnung erfolgten auf einer Tinius Olsen Universalprüfmaschine H10KS. Zur Bestimmung der Foliendicke wurde das Präzisionsdickenmessgerät DM 2000 von Wolf-Messtechnik verwendet. Die Ergebnisse der Messungen sind in Tab. 4 aufgeführt.

**Tab. 4: Mechanische Eigenschaften der Folie**

| Dicke der Folie [µm] | Zugfestigke it (MD) [MPa] | Zugfestigke it (TD) [MPa] | Reißdehnung (MD) [%] | Reißdehnung (TD) [%] |
|---|---|---|---|---|
| 25-30 | 39, 1 | 35, 5 | 665 | 816 |

Wie den Tab. 3 und 4 zu entnehmen ist, weist die Folie hervorragende mechanische Eigenschaften zur Verwendung als Transportbeutel sowie eine sehr gute Zersetzung in Meerwasser auf. Nach etwas über einem Monat in Meerwasser hat sich die Folie fast vollständig zersetzt (Tab. 3, Z. 3).

### Beispiel 2:

Mit einem Doppelschneckenextruder des Typs Coperion ZSK 40 (zweiwelliger Schneckenkneter), Schneckendurchmesser 40 mm, L/D = 42, wurde ein Polymerblend mit der in Tab. 5 angegebenen Rezeptur B hergestellt und zu Granulat verarbeitet (dosierte Anteile in Massenprozent):

**Tab. 5: Rezeptur B**

| Verbindung | Menge |
|---|---|
| PHBH | 69, 3 |
| PBSA | 29, 7 |
| Loxiol | 1 |

Dabei wurden folgende Compoundierparameter eingehalten:

**Tab. 6: Temperaturprofil (Doppelschneckenextruder ZSK 40)**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 105 °C | 120 °C | 120 °C | 135 °C | 155 °C | 165 °C | 165 °C | 165 °C | 160 °C | 160 °C |

| | |
|---|---|
| Drehzahl | 100 min⁻¹ |
| Durchsatz | 50 kg/h |
| Entgasung | - 0,98 bar, Zone 8 |
| Wassergehalt | 0,1 % |

Aus dem hergestellten Granulat wurden Blasfolien hergestellt. Hierfür wurde das Granulat B mit einem Einwellenextruder des Typs KABRA, Schneckendurchmesser 65 mm, L/D = 23, aufgeschmolzen und zu einer Blasfolie verarbeitet.

In Tab. 7 ist die relative Zersetzung der Folie innerhalb eines Zeitraums von 72 Tagen in Meerwasser dokumentiert.

**Tab. 7: Relative Zersetzung der Folie erhältlich aus Granulat B**

| Tage | Zersetzung |
|---|---|
| 0 | 1 |
| 22 | (2) -3 |
| 37 | 4 |
| 72 | 4 |

### Legende:

| Wert | Bedeutung |
|---|---|
| 1 | Folie intakt |
| 2 | Zersetzung sichtbar |
| 3 | Zersetzung fortgeschritten |
| 4 | Folie komplett zersetzt |

Die mechanischen Eigenschaften der Folie wurden überprüft. Die Messung wurde mit den gleichen Apparaten wie in Beispiel 1 durchgeführt. Die Ergebnisse der Messung sind in Tab. 8 aufgeführt.

**Tab. 8: Mechanische Eigenschaften der Folie**

| Dicke der Folie [µm] | Zugfestigke it (MD) [MPa] | Zugfestigke it (TD) [MPa] | Reißdehnung (MD) [%] | Reißdehnung (TD) [%] |
|---|---|---|---|---|
| 20-55 | 25,3 | 23, 9 | 475 | 544 |

Wie den Tab. 7 und Tab. 8 zu entnehmen ist, weist die Folie aus Granulat B eine gute Kombination aus Abbaubarkeit im Meerwasser und mechanischen Eigenschaften zur Verwendung als Transportbeutel auf.

Die in den nachfolgenden Punkten beschriebenen Gegenstände stellen weitere Ausführungsformen der Erfindung dar:
1. Folie umfassend 10-90 Gew.-% einer Komponente A und 10-90 Gew.-% einer Komponente B, bezogen auf die Summe der Komponenten A und B,
   wobei A ein Polyhydroxyalkanoat ist und
   wobei B ein aliphatischer Copolyester ist, der aus mindestens einer Diol Komponente und mindestens einer Dicarbonsäure Komponente zusammengesetzt ist,
   und wobei die Folie eine Gesamtdicke von 1 bis 200 µm aufweist.
2. Folie gemäß Punkt 1, dadurch gekennzeichnet, dass die Folie mindestens eine der folgenden mechanische Eigenschaften aufweist:
   - Zugfestigkeit der Folie in trockenem Zustand in Extrusionsrichtung (MD) von mindestens 15 MPa gemäß EN ISO 527;
   - Zugfestigkeit der Folie in trockenem Zustand quer zur Extrusionsrichtung (TD) von mindestens 15 MPa gemäß EN ISO 527;
   - Reißdehnung der Folie in trockenem Zustand in Extrusionsrichtung (MD) von mindestens 100% gemäß EN ISO 527;
   - Reißdehnung der Folie in trockenem Zustand quer zur Extrusionsrichtung (TD) von mindestens 100% gemäß EN ISO 527.
3. Folie gemäß einem der Punkte 1 oder 2, dadurch gekennzeichnet, dass die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.
4. Folie gemäß einem der vorstehenden Punkte, dadurch gekennzeichnet, dass Komponente A ausgewählt ist aus der Gruppe bestehend aus Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hexanoat) und Mischungen davon.
5. Folie gemäß einem der vorstehenden Punkte, dadurch gekennzeichnet, dass Komponente A Poly(3-hydroxybutyrat-co-3-hexanoat) ist.
6. Folie gemäß einem der vorstehenden Punkte, dadurch gekennzeichnet, dass Komponente A ein zahlenmittleres Molekulargewicht von 100.000 bis 1.500.000 g/mol, 200.000 bis 1.000.000 g/mol, 300.000 bis 800.000 g/mol, 400.000 bis 700.000 g/mol oder 500.000 bis 600.000 g/mol, aufweist.
7. Folie gemäß einem der vorstehenden Punkte, dadurch gekennzeichnet, dass Komponente B ein aliphatischer Copolyester, der sich aus mindestens einer Diol Komponente und mindestens zwei Dicarbonsäure Komponenten zusammensetzt, ist.
8. Folie gemäß einem der vorstehenden Punkte, dadurch gekennzeichnet, dass Komponente B Poly(butylenadipat-co-succinat) ist.
9. Folie gemäß einem der vorstehenden Punkte, dadurch gekennzeichnet, dass Komponente B ein zahlenmittleres Molekulargewicht von 50.000 bis 500.000 g/mol, 70.000 bis 400.000 g/mol, 90.000 bis 300.000 g/mol oder 100.000 bis 200.000 g/mol, aufweist.
10. Folie gemäß einem der vorstehenden Punkte, dadurch gekennzeichnet, dass die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylenadipat-co-terephthalat), bezogen auf das Gesamtgewicht, umfasst.
11. Folie gemäß einem der vorstehenden Punkte, dadurch gekennzeichnet, dass die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylensebacat-co-terephthalat), bezogen auf das Gesamtgewicht, umfasst.
12. Folie gemäß einem der vorstehenden Punkte, dadurch gekennzeichnet, dass die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Polycaprolacton, bezogen auf das Gesamtgewicht, umfasst.
13. Folie gemäß einem der vorstehenden Punkte, dadurch gekennzeichnet, dass die Folie 0,1 bis 20 Gew.-%, 2 bis 18 Gew.-%, 5 bis 15 Gew.-% oder 8 bis 12 Gew.-% Stärke, insbesondere thermoplastische Stärke, bezogen auf das Gesamtgewicht, umfasst.
14. Folie gemäß einem der vorstehenden Punkte, dadurch gekennzeichnet, dass die Folie eine Gesamtdicke von 5 bis 200 µm, 10 bis 80 µm oder 15 bis 60 µm, aufweist.
15. Folie gemäß einem der vorstehenden Punkte, dadurch gekennzeichnet, dass die Folie 20 bis 80 Gew.-%, insbesondere 25 bis 75 Gew.-% der Komponente A, bezogen auf die Summe von Komponenten A und B, umfasst.
16. Folie gemäß einem der vorstehenden Punkte, **dadurch** gekennzeichnet, dass die Folie 20 bis 80 Gew.-%, insbesondere 25 bis 75 Gew.-% der Komponente B, bezogen auf die Summe von Komponenten A und B, umfasst.
17. Folie gemäß einem der vorstehenden Punkte, dadurch gekennzeichnet, dass die Folie eine Zugfestigkeit in trockenem Zustand in Extrusionsrichtung (MD) von mindestens 20 MPa, insbesondere von mindestens 25 MPa, gemäß EN ISO 527, aufweist.
18. Folie gemäß einem der vorstehenden Punkte, dadurch gekennzeichnet, dass die Folie eine Zugfestigkeit in trockenem Zustand quer zur Extrusionsrichtung (TD) von mindestens 20 MPa, insbesondere von mindestens 25 MPa, gemäß EN ISO 527, aufweist.
19. Folie gemäß einem der vorstehenden Punkte, dadurch gekennzeichnet, dass die Folie eine Reißdehnung in trockenem Zustand in Extrusionsrichtung (MD) von mindestens 200%, mindestens 300% oder mindestens 400%, gemäß EN ISO 527, aufweist.
20. Folie gemäß einem der vorstehenden Punkte, dadurch gekennzeichnet, dass die Folie eine Reißdehnung in trockenem Zustand quer zur Extrusionsrichtung (TD) von mindestens 200%, mindestens 300% oder mindestens 400%, gemäß EN ISO 527, aufweist.
21. Folie gemäß einem der vorstehenden Punkte, dadurch gekennzeichnet, dass der organische Kohlenstoff der Folie nach Einbringen in Salzwasser innerhalb von 180 Tagen bei 30 ± 2°C, gemäß der Methode ASTM D6691-09, zu mindestens 40%, insbesondere zu mindestens 50%, zu Kohlenstoffdioxid umgesetzt ist.
22. Folie gemäß einem der vorstehenden Punkte, dadurch gekennzeichnet, dass die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 20 Gew.-%, insbesondere maximal 10 Gew.-% des ursprünglichen Trockengewichts aufweist.
23. Folie gemäß einem der vorstehenden Punkte, dadurch gekennzeichnet, dass der organische Kohlenstoff der Folie in aktiven Abbaubedingungen gemäß der Methode DIN EN ISO 14855-1:2012 innerhalb von 180 Tagen zu mindestens 70%, zu mindestens 80% oder zu mindestens 90%, in Kohlenstoffdioxid umgesetzt wurde.
24. Verwendung eines Polymerblends enthaltend Komponente A und Komponente B zur Herstellung einer Folie mit einer Gesamtdicke von 1 bis 200 µm und mindestens einer der folgenden mechanischen Eigenschaften:
   - Zugfestigkeit in trockenem Zustand in Extrusionsrichtung (MD) von mindestens 15 MPa gemäß EN ISO 527;
   - Zugfestigkeit in trockenem Zustand quer zur Extrusionsrichtung (TD) von mindestens 15 MPa gemäß EN ISO 527;
   - Reißdehnung in trockenem Zustand in Extrusionsrichtung (MD) von mindestens 100% gemäß EN ISO 527;
   - Reißdehnung in trockenem Zustand quer zur Extrusionsrichtung (TD) von mindestens 100% gemäß EN ISO 527;
   und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.
25. Verwendung nach Punkt 24, dadurch gekennzeichnet, dass Komponente A wie in einem der Punkte 1 oder 4 bis 6 definiert ist und/oder dass Komponente B wie in einem der Punkte 1 oder 7 bis 9 definiert ist.
26. Verwendung nach einem der Punkte 24 oder 25, dadurch gekennzeichnet, dass der Polymerblend 10-90 Gew.-%, insbesondere 20 bis 80 Gew.-% oder 25 bis 75 Gew.-% der Komponente A enthält, bezogen auf die Summe der Komponenten A und B, und/oder 10-90 Gew.-%, insbesondere 20 bis 80 Gew.-% oder 25 bis 75 Gew.-% der Komponente B enthält, bezogen auf die Summe der Komponenten A und B.
27. Transportbeutel enthaltend eine Folie gemäß einem der Punkte 1 bis 23.
28. Transportbeutel gemäß Punkt 27, dadurch gekennzeichnet, dass der Transportbeutel ausgewählt ist aus der Gruppe bestehend aus Tragetasche, Obstbeutel, Gemüsebeutel, Light T-Shirt Bag und Ultra-Light T-Shirt Bag.
29. Transportbeutel gemäß Punkt 27 oder 28, dadurch gekennzeichnet, dass der Transportbeutel ein Gewicht von 1 bis 90 g, 2 bis 50 g, 20 bis 40 g, 1 bis 10 g oder 1,5 bis 5 g aufweist.
30. Verfahren zur Herstellung einer Folie gemäß einem der Punkte 1 bis 23, gekennzeichnet durch folgende Schritte:
   a. Bereitstellen eines Polymerblends enthaltend Komponente A und Komponente B;
   b. Ausbilden einer Folie aus dem Polymerblend gemäß Schritt a.
31. Verfahren gemäß Punkt 30, dadurch gekennzeichnet, dass das Verfahren einen Coextrusionsschritt umfasst.
32. Verfahren gemäß Punkt 30 oder 31, dadurch gekennzeichnet, dass das Verfahren einen Kaschierungsschritt umfasst.
33. Verfahren gemäß einem der Punkte 30 bis 32, dadurch gekennzeichnet, dass Komponente A wie in einem der Punkte 1 oder 4 bis 6 definiert ist und/oder dass Komponente B wie in einem der Punkte 1 oder 7 bis 9 definiert ist.
34. Verfahren gemäß einem der Punkte 30 bis 33, dadurch gekennzeichnet, dass der Polymerblend 10-90 Gew.-%, insbesondere 20 bis 80 Gew.-% oder 25 bis 75 Gew.-% der Komponente A enthält, bezogen auf die Summe der Komponenten A und B, und/oder 10-90 Gew.-%, insbesondere 20 bis 80 Gew.-% oder 25 bis 75 Gew.-% der Komponente B enthält, bezogen auf die Summe der Komponenten A und B.

## Patentansprüche

1. Folie umfassend 10-90 Gew.-% einer Komponente A und 10-90 Gew.-% einer Komponente B, bezogen auf die Summe der Komponenten A und B,
wobei A ein Polyhydroxyalkanoat ist und
wobei B ein aliphatischer Copolyester ist, der aus mindestens einer Diol Komponente und mindestens einer Dicarbonsäure Komponente zusammengesetzt ist,
und wobei die Folie eine Gesamtdicke von 1 bis 200 µm und mindestens eine der folgenden mechanische Eigenschaften aufweist:
- Zugfestigkeit der Folie in trockenem Zustand in Extrusionsrichtung (MD) von mindestens 15 MPa gemäß EN ISO 527;
- Zugfestigkeit der Folie in trockenem Zustand quer zur Extrusionsrichtung (TD) von mindestens 15 MPa gemäß EN ISO 527;
- Reißdehnung der Folie in trockenem Zustand in Extrusionsrichtung (MD) von mindestens 100% gemäß EN ISO 527;
- Reißdehnung der Folie in trockenem Zustand quer zur Extrusionsrichtung (TD) von mindestens 100 % gemäß EN ISO 527, und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30 % des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

2. Folie gemäß einem der vorstehenden Ansprüche, **dadurch gekennzeichnet, dass** Komponente A ausgewählt ist aus der Gruppe bestehend aus Poly(3-hydroxybutanoat), Poly(3-hydroxyvalerat), Poly(3-hydroxyhexanoat), Poly(3-hydroxybutyrat-co-3-hydroxyvalerat), Poly(3-hydroxybutyrat-co-3-hexanoat) und Mischungen davon, und/oder
dass Komponente A Poly(3-hydroxybutyrat-co-3-hexanoat) ist, und/oder
dass Komponente A ein zahlenmittleres Molekulargewicht von 100.000 bis 1.500.000 g/mol, 200.000 bis 1.000.000 g/mol, 300.000 bis 800.000 g/mol, 400.000 bis 700.000 g/mol oder 500.000 bis 600.000 g/mol, aufweist, und/oder
dass Komponente B ein aliphatischer Copolyester, der sich aus mindestens einer Diol Komponente und mindestens zwei Dicarbonsäure Komponenten zusammensetzt, ist, und/oder
dass Komponente B Poly(butylenadipat-co-succinat) ist, und/oder
dass Komponente B ein zahlenmittleres Molekulargewicht von 50.000 bis 500.000 g/mol, 70.000 bis 400.000 g/mol, 90.000 bis 300.000 g/mol oder 100.000 bis 200.000 g/mol, aufweist.

3. Folie gemäß einem der vorstehenden Ansprüche, **dadurch gekennzeichnet, dass** die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylenadipat-co-terephthalat), bezogen auf das Gesamtgewicht, umfasst, und/oder
dass die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylensebacat-co-terephthalat), bezogen auf das Gesamtgewicht, umfasst, und/oder
dass die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Polycaprolacton, bezogen auf das Gesamtgewicht, umfasst, und/oder
dass die Folie 0,1 bis 20 Gew.-%, 2 bis 18 Gew.-%, 5 bis 15 Gew.-% oder 8 bis 12 Gew.-% Stärke, insbesondere thermoplastische Stärke, bezogen auf das Gesamtgewicht, umfasst.

4. Folie gemäß einem der vorstehenden Ansprüche, **dadurch gekennzeichnet, dass** die Folie eine Gesamtdicke von 5 bis 200 µm, 10 bis 80 µm oder 15 bis 60 µm, aufweist.

5. Folie gemäß einem der vorstehenden Ansprüche, **dadurch gekennzeichnet, dass** die Folie 20 bis 80 Gew.-%, insbesondere 25 bis 75 Gew.-% der Komponente A, bezogen auf die Summe von Komponenten A und B, umfasst, und/oder
dass die Folie 20 bis 80 Gew.-%, insbesondere 25 bis 75 Gew.-% der Komponente B, bezogen auf die Summe von Komponenten A und B, umfasst.

6. Folie gemäß einem der vorstehenden Ansprüche, **dadurch gekennzeichnet, dass** die Folie eine Zugfestigkeit in trockenem Zustand in Extrusionsrichtung (MD) von mindestens 20 MPa, insbesondere von mindestens 25 MPa, gemäß EN ISO 527, aufweist, und/oder
dass die Folie eine Zugfestigkeit in trockenem Zustand quer zur Extrusionsrichtung (TD) von mindestens 20 MPa, insbesondere von mindestens 25 MPa, gemäß EN ISO 527, aufweist, und/oder
dass die Folie eine Reißdehnung in trockenem Zustand in Extrusionsrichtung (MD) von mindestens 200 %, mindestens 300% oder mindestens 400 %, gemäß EN ISO 527, aufweist, und/oder
dass die Folie eine Reißdehnung in trockenem Zustand quer zur Extrusionsrichtung (TD) von mindestens 200 %, mindestens 300 % oder mindestens 400 %, gemäß EN ISO 527, aufweist.

7. Folie gemäß einem der vorstehenden Ansprüche, **dadurch gekennzeichnet, dass** der organische Kohlenstoff der Folie nach Einbringen in Salzwasser innerhalb von 180 Tagen bei 30 ± 2 °C, gemäß der Methode ASTM D6691-09, zu mindestens 40 %, insbesondere zu mindestens 50 %, zu Kohlenstoffdioxid umgesetzt ist, und/oder
dass die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 20 Gew.-%, insbesondere maximal 10 Gew.-% des ursprünglichen Trockengewichts aufweist, und/oder
dass der organische Kohlenstoff der Folie in aktiven Abbaubedingungen gemäß der Methode DIN EN ISO 14855-1:2012 innerhalb von 180 Tagen zu mindestens 70 %, zu mindestens 80 % oder zu mindestens 90 %, in Kohlenstoffdioxid umgesetzt wurde.

8. Verwendung eines Polymerblends enthaltend 10-90 Gew.-% einer Komponente A und 10-90 Gew.-% einer Komponente B, bezogen auf die Summe der Komponenten A und B,
wobei A ein Polyhydroxyalkanoat ist und
wobei B ein aliphatischer Copolyester ist, der aus mindestens einer Diol Komponente und mindestens einer Dicarbonsäure Komponente zusammengesetzt ist,
zur Herstellung einer Folie mit einer Gesamtdicke von 1 bis 200 µm und mindestens einer der folgenden mechanischen Eigenschaften:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100 % gemäß EN ISO 527;
- Reißdehnung in trockenem Zustand quer zur Extrusionsrichtung (TD) von mindestens 100 % gemäß EN ISO 527;
und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30 % des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

9. Verwendung nach Anspruch 8, **dadurch gekennzeichnet, dass** Komponente A wie in Anspruch 2definiert ist und/oder dass Komponente B wie in Anspruch 2 definiert ist, und/oder
dass der Polymerblend 20 bis 80 Gew.-%, insbesondere 25 bis 75 Gew.-% der Komponente A enthält, bezogen auf die Summe der Komponenten A und B, und/oder 20 bis 80 Gew.-%, insbesondere 25 bis 75 Gew.-% der Komponente B enthält, bezogen auf die Summe der Komponenten A und B.

10. Transportbeutel enthaltend eine Folie gemäß einem der Ansprüche 1 bis 7.

11. Transportbeutel gemäß Anspruch 10, **dadurch gekennzeichnet, dass** der Transportbeutel ausgewählt ist aus der Gruppe bestehend aus Tragetasche, Obstbeutel, Gemüsebeutel, Light T-Shirt Bag und Ultra-Light T-Shirt Bag, und/oder
dass der Transportbeutel ein Gewicht von 1 bis 90 g, 2 bis 50 g, 20 bis 40 g, 1 bis 10 g oder 1,5 bis 5 g aufweist.

12. Verfahren zur Herstellung einer Folie gemäß einem der Ansprüche 1 bis 7, **gekennzeichnet durch** folgende Schritte:
a. Bereitstellen eines Polymerblends enthaltend 10-90 Gew.-% einer Komponente A und 10-90 Gew.-% einer Komponente B, bezogen auf die Summe der Komponenten A und B,
wobei A ein Polyhydroxyalkanoat ist, und
wobei B ein aliphatischer Copolyester ist, der aus mindestens einer Diol Komponente und mindestens einer Dicarbonsäure Komponente zusammengesetzt ist;
b. Ausbilden einer Folie aus dem Polymerblend gemäß Schritt a,
wobei die Folie eine Gesamtdicke von 1 bis 200 µm und mindestens eine der folgenden mechanische Eigenschaften aufweist:
- Zugfestigkeit der Folie in trockenem Zustand in Extrusionsrichtung (MD) von mindestens 15 MPa gemäß EN ISO 527;
- Zugfestigkeit der Folie in trockenem Zustand quer zur Extrusionsrichtung (TD) von mindestens 15 MPa gemäß EN ISO 527;
- Reißdehnung der Folie in trockenem Zustand in Extrusionsrichtung (MD) von mindestens 100 % gemäß EN ISO 527;
- Reißdehnung der Folie in trockenem Zustand quer zur Extrusionsrichtung (TD) von mindestens 100 % gemäß EN ISO 527,
und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30 % des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

13. Verfahren gemäß Anspruch 12, **dadurch gekennzeichnet, dass** das Verfahren einen Coextrusionsschritt umfasst, und/oder
dass das Verfahren einen Kaschierungsschritt umfasst, und/oder
dass Komponente A wie in Anspruch 2 definiert ist und/oder dass Komponente B wie in Anspruch 2 definiert ist, und/oder
dass der Polymerblend 20 bis 80 Gew.-%, insbesondere 25 bis 75 Gew.-% der Komponente A enthält, bezogen auf die Summe der Komponenten A und B, und/oder 20 bis 80 Gew.-%, insbesondere 25 bis 75 Gew.-% der Komponente B enthält, bezogen auf die Summe der Komponenten A und B.

14. Verwendung einer Folie gemäß einem der Ansprüche 1 bis 7 zur Herstellung eines Transportbeutels.
